Europäisches Patentamt

(19) European Patent Office

Office européen des brevets

(11) Numéro de publication: **0 023 492**
**B1**

(12) **FASCICULE DE BREVET EUROPEEN**

(45) Date de publication du fascicule du brevet: **15.09.82**

(51) Int. Cl.³: **A 01 C 1/00, A 01 F 12/42**

(21) Numéro de dépôt: **80900076.3**

(22) Date de dépôt: **20.12.79**

(86) Numéro de dépôt international:
**PCT/FR79/00128**

(87) Numéro de publication internationale:
**WO 80/01531 07.08.80 Gazette 80/18**

(54) **DISPOSITIF D'EBARBAGE DE GRAINES.**

(30) Priorité: **06.02.79 FR 7902969**

(43) Date de publication de la demande:
**11.02.81 Bulletin 81/6**

(45) Mention de la délivrance du brevet:
**15.09.82 Bulletin 82/37**

(84) Etats contractants désignés:
**AT CH DE FR GB LU NL SE**

(56) Documents cités:
**DE - C - 915 873**
**US - A - 2 750 977**

(73) Titulaire: **ETS LOISEAU FRERES**
**Les Goderies - Ruaudin**
**72230 Arnage (FR)**

(72) Inventeur: **LOISEAU, Roger**
**157 Rue Gambetta**
**72000 Le Mans (FR)**

(74) Mandataire: **Dupuy, René Gaston et al,**
**Cabinet DUPUY & LOYER 14 rue La Fayette**
**F-75009 Paris (FR)**

Courier Press, Leamington Spa, England.

Dispositif d'ébarbage de graines

## Domaine technique

L'invention se rapporte à un nouveau dispositif d'ébarbage de graines et semences dites "aristées" parce que leur caryopse se prolonge par une arête communément appelée "barbe," comme par exemple, la graine du brome (bromus catharticus). On sait que de telles graines sont difficiles à semer dans des semoirs mécaniques, car leurs barbes, en s'entremêlant, les empêchent de couler régulièrement dans les goulottes de ces appareils, il s'ensuit un semis irrégulier, à plages restant non ou peu ensemencées, alors que d'autres le sont en excès. La conséquence de cette irrégularité est une consommation disproportionnée de graines à l'hectare, consommation qui peut atteindre le double de ce qui est effectivement nécessaire.

## Technique antérieure

Pour remédier à cette consommation anormale, on a proposé d'ébarber préalablement les semences aristées, soit en les projetant violemment contre une surface rugueuse, soit en les soumettant à des fléaux (par exemple selon le DE—C—322512).

Ces procédés sont inadmissibles avec certaines espèces trop fragiles pour supporter sans dommage ces traitements.

On pense évidemment à couper ou à brûler les barbes, mais si l'on veut éviter d'endommager les graines lors de ces opérations, il est nécessaire, non seulement de les maintenir pour obtenir une coupe correcte, mais encore de les protéger pendant l'opération de destruction des barbes.

C'est ainsi que le DE—C—915873 propose de brûler les barbes et balles de semence, en les projetant dans la flamme d'un brûler. Cette manière de procéder présente l'inconvénient majeur de détruire à la fois la barbe et le tégument, de chauffer voire brûler le caryopse non seulement superficiellement mais souvent suffissament à coeur pour en stériliser le germe.

La difficulté à surmonter est donc de maintenir la graine dans une position déterminée pendant l'opération d'ébarbage. Or, la solution de ce problème est d'autant plus difficile qu'elle doit tenir compte, d'une part du rendement c'est-à-dire de l'obligation de traiter simultanément une multitude de semences et d'autre part, de la faible dimension de chacune de celles-ci. En effet, le problème se décompose en deux phases:

— donner une orientation immuable à la graine.

— la maintenir dans cette orientation pendant l'opération d'ébarbage.

On a déjà proposé d'orienter des graines du type considéré, en les plaçant dans un fort courant d'air qui les déplace en direction d'un tamis, leur barbe jouant le rôle de l'empennage d'une flèche. Dans le FR—A—1 244 464, ce phénomène d'orientation est utilisé pour trier des graines à caryopse excentrée comme le "Ray-Grass." La demanderesse a essayé d'utiliser un processus analogue pour résoudre le nouveau problème ci-dessus exposé, mais elle s'est vite aperçu que rien de bon n'était à espérer car, si les graines emportées par le courant d'air prenaient bien une orientation unique, ce n'est pas pour autant que se trouve résolu le problème de maintenance constituant la seconde phase. Autrement dit, le principe était parfaitement valable pour un processus dynamique continu, il ne l'était plus pour un processus séquentiel.

Le US—A—2 750 977 décrit un dispositif d'équeutage d'oignon dans lequel ceux-ci, entraînés par un transporteur formé d'un tissu métallique à fortes mailles, en regard d'un couteau, sont maintenus sensiblement verticaux par un flux d'air passant au travers de ce transporteur.

Si ce document suggère l'idée d'orienter le produit à traiter au moyen d'air à haute pression, cette idée doit être transposée lorsque le produit en cause n'est plus un oignon dont la base est suffisamment importante pour lui conférer une position verticale par gravité, mais une graine dont la légèreté interdit l'usage de ces fortes pressions, et la forme ne lui confère aucune assise stable d'autant plus qu'avec un tel appareil, reste à prévoir l'alimentation du transporteur en produit, (c'est-à-dire de graines) déjà orientées.

## Exposé de l'invention

La présente invention a pour objet, un dispositif dans lequel on utilise un gaz sous faible pression pour orienter les graines et les placer dans des alvéoles qui les maintiendront orientées et les protègeront pendant l'opération d'ébarbage.

## Brève description des dessins

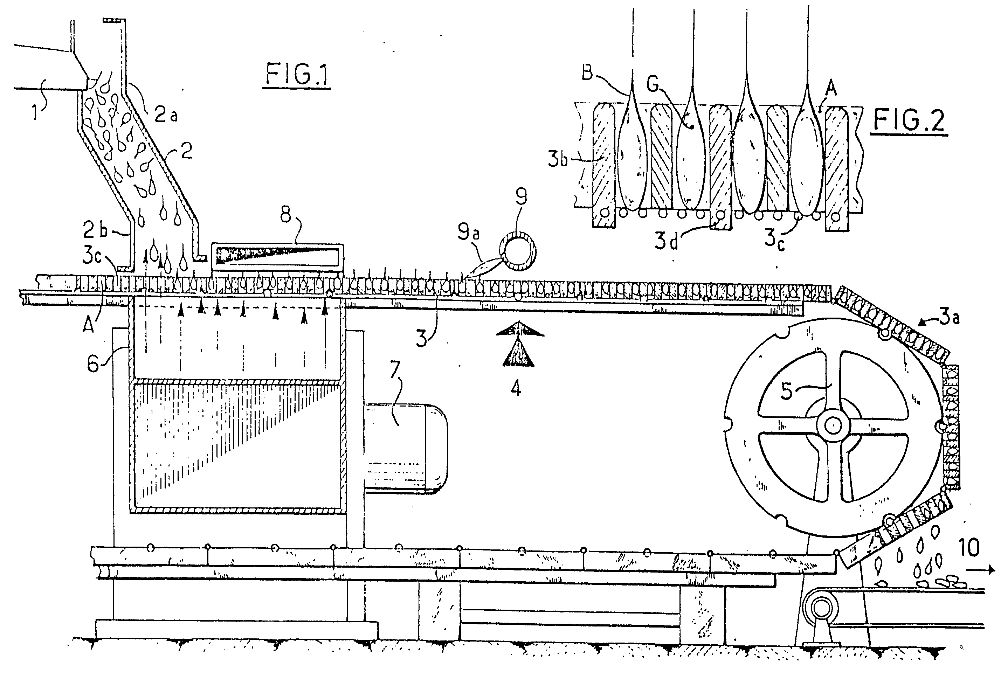

D'autres particularités et avantages de l'invention apparaîtront à la lecture de la description et des revendications que suivent, faites en regard des dessins annexés, sur lesquels la figure 1 est une vue schématique partielle en coupe mongitudinale d'un dispositif conforme à l'invention et la figure 2 une vue de détail à grande échelle.

## Meilleure manière de réaliser l'invention

Comme on le voit notamment sur cette figure 1, le dispositif comprend un alimentateur (1) déversant les graines à ébarber à la partie supérieure (2a) d'une goulotte verticale (2), dans laquelle tombe la graine par gravité, en direction d'un transporteur (3) destiné à les amener au poste d'ébarbage (4).

Le transporteur est constitué de plaques perforées (3a) articulées entre elles comme les chaînons d'une chaîne entrainée par des tambours ou pignons (5).

Au-dessous d'une partie du transporteur (3) se trouve une gaine (6) d'évacuation de l'air soufflé à basse pression par un ventilateur ou surpresseur (7). Le flux d'air traverse les plaques perforées (3a). La goulotte (2) est placée au-dessus d'au moins une fraction de la gaine (6), de cette manière, une partie de son air pulsé remonte dans la goulotte (2).

A la sortie de l'alimentateur 1 et dans la partie haute (2a) de la goulotte, les graines tombent en vrac, sans orientation précise, leurs barbes étant emmélées.

Elles rencontrent le flux remontant d'air pulsé qui les démelle, les sépare et les oriente de telle manière que dans la partie basse (2b), d'une part, leur descente se trouve freinée tout en étant identiquement orientées, la barbe en haut, mais d'autre part, leur écoulement est "fluide". Ainsi est résolu la première condition d'un bon ébarbage: l'orientation immuable des graines.

Chaque plaque (3a) est constituée par l'entrecroisement de barreaux verticaux tels que (3b) placés au-dessus d'un grillage (3c). L'alvéole (A) formée par deux barreaux consécutifs (3b) et le grillage (3c) lui servant de fond, est destinée à recevoir une ou plusieurs graines (G) tombant orientées, la barbe en haut de la goulotte (2).

Les parois verticales des barreaux (3b) devant, d'une part, maintenir les graines orientées dans cette position et d'autre part leur servir d'écran pour éviter leur destruction par les moyens d'ébarbage qui seront décrits plus loin, ont une hauteur telle que le caryopse de la graine est entièrement contenu dans l'alvéole ainsi formée, seule en émerge la barbe (B).

Certains barreaux sont prolongés vers le bas par des talons (3d) qui servent à l'entraînement du transporteur par les tambours ou pignons (5).

La densité du flux de graines tombant sur le transporteur (3) est néanmoins nettement supérieure au besoin en graines des alvéoles (A), afin que le remplissage de celle-ci soit maximal.

Pour éliminer les graines en excédant, on utilise un jet d'air transversal sortant d'une buse (8), qui les écarte du transporteur (3) en vue de leur recyclage. Ce jet d'air coopère au flux véhiculé par la partie de la gaine (6) placée en aval de la goulotte (2).

De cette manière, les graines excédentaires sont sensiblement maintenues orientées pendant leur évacuation, ce qui évite que leur barbe ne se mêle à celles des graines qui vont être ébarbées.

Celles-ci, au poste (4) rencontrent un organe destructeur de barbe placé transversalement au sens de déplacement du transporteur au ras de l'ouverture supérieure des alvéoles.

Sur la figure 1 cet organe destructeur est une rampe à gaz (9) dont la flamme (9a) est quasi-horizontale ou tout au moins à peine inclinée.

Cette flamme ne peut atteindre que la barbe à éliminer sans atteindre le caryopse protégé par les barreaux (3b).

Sans qu'il soit nécessaire de faire un nouveau dessin, il est aisé de comprendre que cette rampe à gaz (9) peut être remplacée par une résistance électrique sous tension ou encore par un dispositif de coupe à deux lames du type tondeuse, bien que celui-ci soit moins performant. Les semences ébarbées sont évacuées en (10).

Possibilité d'exploitation industrielle

Le dispositif qui vient d'être décrit trouve son application dans l'ébarbage de semences aristées fragiles comme des graines du brome.

**Revendications**

1. Dispositif d'ébarbage de graines aristées comprenant un dispositif d'alimentation, constitué par une goulotte (2) au moins partiellement verticale dans laquelle les graines à traiter tombent par gravité, un transporteur (3) transfèrant les graines depuis la sortie (26) de la goulotte jusqu'à un poste d'ébarbage (4); des moyens d'ébarbage (9) et un collecteur de graines ébarbées caractérisé en ce qu'il comprend en outre des moyens d'insufflation d'air (6, 7) sous faible pression dans ladite goulotte (2), à contre courant de la descente des graines par gravité, de manière à freiner leur chute et les maintenir dans la position verticale pendant celle-ci.

2. Dispositif selon la revendication 1 dans lequel les moyens d'insufflation d'air (6, 7) sont placés au-dessous du transporteur (3) transfèrant les graines au poste d'ébarbage (4) caractérisé en ce que ces moyens d'insufflation sont disposés tels que leur tubulure de sortie fasse vis-à-vis à la goulotte d'alimentation, de manière que l'air traversant le transporteur de bas en haut, entre dans ladite goulotte.

3. Dispositif selon l'une des revendications précédentes caractérisé en ce que ce transporteur (3) est constitué d'une surface alvéolaire pourvue d'un fond perméable à l'air.

4. Dispositif selon la revendication 3 dans lequel ledit transporteur (3) est constitué par une suite sans fin de plaques articulées entre elles à la manière des maillons d'une chaîne caractérisé en ce que chacune de ces plaques-chaînons est constituée d'une grille formée à l'entrecroisement d'une multitude de barreaux (3b) dont la hauteur est sensiblement égale à celle du caryopse de la graine à traiter (G), la barbe (B) emergeant seule du plan supérieur des barreaux.

5. Dispositif selon la revendication 4 caractérisé en ce que chaque alvéole (A) formée par entrecroisement desdits barreaux (3b) est placée au-dessus d'un grillage (3c) lui servant de fond sur lequel les graines (G) viennent reposer par leur extrémité opposée à la barbe.

6. Dispositif selon les revendications précédentes, caractérisé en ce que le transporteur présente successivement chaque rangée d'alvéoles garnies de graines, barbe en haut, aux moyens d'ébarbage (9).

7. Dispositif selon la revendication 6, caractérisé en ce que les moyens d'ébarbage consistent en une rampe a gaz (9), dont la flamme (9a) est dirigée presque horizontalement.

8. Dispositif selon la revendication 6, caractérisé en ce que les moyens d'ébarbage consistent en une résistance électrique, tendue au travers du transporteur parallèlement et à proximité de la surface supérieure des plaques alvéolées.

9. Dispositif selon la revendication 6 dans lequel les moyens d'ébarbage consistent en un dispositif de coupe, caractérisé en ce que les lames le constituant, une mobile et l'autre fixe, sont placées parallèlement et à proximité de la surface supérieure des plaques alvéolées.

## Patentansprüche

1. Vorrichtung zum Entfernen der Grannen von Samenkörnern, bestehend aus einer Zuführungseinrichtung, die aus einem mindestens teilweise senkrecht verlaufenden Schacht (2) besteht, in dem die zu behandelnden Samen aufgrund der Schwerkraft hinunterfallen, wobei ein Förderer die Samen vom Ausgang (6) des Schachtes bis zu einer Entgrannstation (4) führt, aus zum Entgrannen bestimmten Mitteln (9) sowie aus einer Sammelvorrichtung für die entgrannten Samen, dadurch gekennzeichnet, daß sie außerdem Mittel zum Einblasen von Luft (6, 7) unter niedrigem Druck in den obengenannten Schacht (2) in Gegenrichtung zur Abwärtsbewegung der durch Schwerkraft hinunterfallenden Samen enthält, so daß deren Fall gebremst wird und sie während des Falls senkrecht bleiben.

2. Vorrichtung nach Patentanspruch 1, in der die Mittel zum Einblasen von Luft (6, 7) unterhalb des die Samen zur Entgrannstation (4) überführenden Förderers (3) angeordnet sind, dadurch gekennzeichnet, daß diese Einblasmittel so angeordnet sind, daß ihr Ausgangsstutzen dem Zuführungsschacht gegenüberliegt, so daß die von unten nach oben durch den Förderer fließende Luft in den obengenannten Schacht hineinströmt.

3. Vorrichtung nach Patentanspruch 1 oder 2, dadurch gekennzeichnet, daß dieser Förderer (3) aus einer mit einem luftdurchlässigen Bodenteil versehenen bienenwabenförmigen Fläche besteht.

4. Vorrichtung nach Patentanspruch 3, in der der obengenannten Förderer (3) aus einer endlosen Reihe von wie Kettenglieder aneinander angelenkten Platten besteht, dadurch gekennzeichnet, daß jedes (jede) dieser Kettenglieder/Platten aus einem Gitter besteht, das durch die Verpflechtung einer Anzahl von Stäben (3b) ausgebildet ist, deren Höhe der des Samenkorns des zu behandelnden Samens (G) ungefähr gleich ist, wobei allein die Granne (B) aus der oberen Fläche der Stäbe hervorragt.

5. Vorrichtung nach Patentanspruch 4, dadurch gekennzeichnet, daß jede durch Verflechtung der obengenannten Stäbe (3b) ausgebildete Zelle (A) über einem Gitterwerk (3c) angeordnet/ist, das ihren Bodenteil bildet, auf dem die Samen (G) mit ihrem der Granne entgegengesetzten Ende zu liegen kommen.

6. Vorrichtung nach Patentanspruch 1 bis 5, dadurch gekennzeichnet, daß der Förderer jede Reihe von mit Samen gefüllten Zellen, mit der Granne nach oben gerichtet, den zum Entgrannen bestimmten Mitteln (9) anbietet.

7. Vorrichtung nach Patentanspruch 6, dadurch gekennzeichnet, daß die Mittel zum Entgrannen aus einem Rohrbrenner (9) bestehen, dessen Flamme (9a) fast waagerecht gerichtet ist.

8. Vorrichtung nach Patentanspruch 6, dadurch gekennzeichnet, daß die Mittel zum Entgrannen aus einem elektrischen Widerstand bestehen, der quer über den Förderer parallel zur oberen Fläche der bienenwabenförmigen Platten und in deren Nähe gespannt ist.

9. Vorrichtung nach Patentanspruch 6, in der die Mittel zum Entgrannen aus einer Schneidevorrichtung bestehen, dadurch gekennzeichnet, daß die sie ausbildenden Klingen, wobei die eine fest und die andere beweglich angeordnet ist, parallel zur oberen Fläche der bienenwabenförmigen Platten und in deren Nähe angeordnet sind.

## Claims

1. A device for trimming bearded grains comprising a supply device constituted by a chute (2) at least part of which is vertical and in which the grains to be treated fall under the effect of gravity, a conveyor (3) transferring the grains from the outlet (2b) of the chute to a trimming station (4), trimming means (9) and a collection means for the trimmed grains, characterised in that it comprises means for blowing air (6, 7) at a low pressure in the said chute (2) in the opposite direction to the descent of the grains under the effect of gravity so as to brake their fall and maintain them in the vertical position during this fall.

2. A device as claimed in claim 1, in which the means for blowing air (6, 7) are located below the conveyor (3) transferring the grains to the trimming station (4), characterised in that these blowing means are disposed in such a way that their outlet tubing faces the supply chute such that the air passing through the conveyor in an upward direction enters the said chute.

3. A device as claimed in any one of the previous claims, characterised in that this conveyor (3) is constituted by a honeycomb surface provided with an air permeable base.

4. A device as claimed in claim 3, in which the said conveyor (3) is constituted by an endless sequence of plates articulated together in a similar manner to the links of a chain, characterised in that each of these plate-links is constituted by a grid formed at the intersection of a plurality of bars (3b) whose height is substantially equal to that of the caryopsis of the grain to be treated (G), only the beard (B) projecting beyond the upper limit of the bars.

5. A device as claimed in claim 4, characterised in that each cell (A) formed by the intersection of the bars (3b) is disposed above a grid (3c) acting as a base for the cell and on which the grains (G) are supported at their ends opposite to the beard.

6. A device as claimed in the previous claims, characterised in that the conveyor successively brings each row of cells containing grains with the beard upward to the trimming means (9).

7. A device as claimed in claim 6, characterised in that the trimming means comprise a gas blower (9) whose flame (9a) is directed almost horizontally.

8. A device as claimed in claim 6, characterised in that the trimming means comprise an electrical resistance stretched across the conveyor in a parallel manner and in the vicinity of the upper surface of the honeycombed plates.

9. A device as claimed in claim 6 in which the trimming means comprise a cutting device, characterised in that the blades constituting this device, one of which is movable and the other fixed, are disposed parallel in the vicinity of the upper surface of the honeycombed plates.

FIG.1

FIG.2

0023 492